(19) Europäisches Patentamt

European Patent Office

Office européen des brevets

(11) **EP 1 445 811 A1**

(12) **EUROPEAN PATENT APPLICATION**
published in accordance with Art. 158(3) EPC

(43) Date of publication:
**11.08.2004 Bulletin 2004/33**

(21) Application number: **02801544.4**

(22) Date of filing: **11.10.2002**

(51) Int Cl.[7]: **H01M 4/96**, H01M 8/10, H01M 4/88, D03D 15/12

(86) International application number:
**PCT/JP2002/010579**

(87) International publication number:
**WO 2003/034519 (24.04.2003 Gazette 2003/17)**

(84) Designated Contracting States:
**AT BE BG CH CY CZ DE DK EE ES FI FR GB GR IE IT LI LU MC NL PT SE SK TR**

(30) Priority: **16.10.2001 JP 2001317813**

(71) Applicant: **TORAY INDUSTRIES, INC.**
**Tokyo 103-8666 (JP)**

(72) Inventors:
• **INOUE, Mikio, Toray-Hokuenryou**
**Otsu-shi, Shiga 520-0842 (JP)**

• **CHIDA, Takashi, Toray-Seienryou**
**Otsu-shi, Shiga 520-0842 (JP)**
• **IGAKURA, Shuichi**
**Kusatsu-shi, Shiga 525-0037 (JP)**

(74) Representative: **Weber, Joachim, Dr.**
**Hoefer & Partner**
**Patentanwälte**
**Gabriel-Max-Strasse 29**
**81545 München (DE)**

(54) **FUEL CELL-USE CARBON FIBER WOVEN FABRIC, ELECTRODE ELEMENT, FUEL CELL, MOBILE UNIT, AND PRODUCTION METHOD FOR FUEL CELL-USE CARBON FIBER WOVEN FABRIC**

(57)    A fuel cell-use carbon fiber woven fabric, especially a carbon fiber woven fabric preferably used for the electrode diffusion layer of an electrode element in a fuel cell. The electrode diffusion layer of an electrode element in a fuel cell, requiring conductivity, gas diffusing/permeating features, and strength that withstands handling, is formed from carbon fiber woven fabrics as is widely known. The conventional carbon fiber woven fabric poses such problems that deformation by compression is large, the dimension of a fuel cell is significantly changed by pressurizing, irregularities by weave texture are large, and contact resistance is large. A carbon fiber woven fabric used for a fuel cell-use carbon fiber woven fabric has an average size of warps and wefts constituting the woven fabric of 0.005-0.028 g/m, and a woven density of the warps and/or wefts of 20 pieces/cm.

EP 1 445 811 A1

**Description**

TECHNICAL FIELD

The present invention relates to a carbon fiber woven fabric to be used in a fuel cell, an electrode element using the carbon fiber woven fabric, a fuel cell using the electrode element, a mobile unit using the fuel cell, and a method for producing a carbon fiber woven fabric to be used in the fuel cell. The invention especially relates to a dense and thin carbon fiber woven fabric to be used in a fuel cell, which can be preferably used as the electrode diffusion layer of an electrode element in a solid polymer electrolyte fuel cell.

BACKGROUND ART

An electrode diffusion layer of a fuel cell is required to allow diffusion and permeation of substances participating in current collecting function and electrode reaction. Furthermore, a material constituting the electrode diffusion layer is required to have electric conductivity, gas diffusibility, gas permeability, strength to endure handling, etc.

As the material used to form the electrode diffusion layer of a fuel cell, a porous carbon plate comprising short carbon fibers bound with carbon, described in JP-06-20710-A, JP-07-326362-A or JP-07-220735-A, is known. However, the porous carbon plate has such problems that it is difficult to produce the plate in a continuous longer form and that the carbon used as a binder is likely to be destroyed under the pressure acting when the electrode is produced or when the carbon plate is assembled into a cell.

As a material capable of being formed as a continuously long material to be used for forming an electrode diffusion layer, a carbon fiber woven fabric is known. Examples of the carbon fiber woven fabric include "PANEX PWB-3" produced by Stackpole Fibers Company which is described in US-4,293,396-A and "AVCARB" produced by Textron Specialty Materials which is described in JP-10-261421-A.

The "PANEX PWB-3" can provide a continuously long material, but if the carbon fiber woven fabric is used as an electrode diffusion layer, it has such problems that a dimension of fuel cell is greatly changed under pressurization, and that separator grooves are filled with the woven fabric, since the woven fabric is greatly deformed under compression. Furthermore, it has a problem that since it is difficult to apply a catalyst layer because of the large undulation attributable to its weave texture, the contact resistance becomes large. Moreover, it has a problem that a woven fabric formed of thick weaving yarns but having a low unit weight causes the catalyst layer to come off, since the gaps between fibers are large.

The invention has been completed in view of the above-mentioned problems of the prior art. An object of the invention is to provide a thin carbon fiber woven fabric slightly deformable under compression, small in electric resistance and suitable for use as an electrode diffusion layer in a fuel cell. Another object of the invention is to provide an electrode element using a carbon fiber woven fabric to be used in a fuel cell of the invention, a fuel cell using the electrode element, and a mobile unit using the fuel cell. A further object of the invention is to provide a method for producing a carbon fiber woven fabric to be used in a fuel cell of the invention.

DISCLOSURE OF THE INVENTION

A carbon fiber woven fabric for a fuel cell of the invention is characterized in that the average fineness of the warp yarns and the weft yarns constituting the woven fabric is in the range of 0.005 to 0.028 g/m, and that the weave density of the warp yarns and/or the weft yarns is not less than 20 yarns/cm.

It is preferred that the unit weight of the woven fabric is in the range of 50 to 150 $g/m^2$.

It is preferred that the thickness of the woven fabric is in the range of 0.1 to 0.3 mm.

It is preferred that the value of N x W is not less than 0.6 where N (yarns/cm) is the weave density of the warp yarns and/or weft yarns and W (cm/yarn) is the yarn width.

It is preferred that the crush value the woven fabric under compression is not more than 0.15 mm.

It is preferred that the warp yarns and/or the weft yarns are spun yarns.

It is preferred that the electric resistance of the woven fabric is not more than 30 $m\Omega cm^2$, and that the differential pressure caused when 14 $cm^3/cm^2/sec$ of air is passed through the woven fabric in the thickness direction is not more than 5 mm Aq.

It is preferred that the ratio of the number of oxygen atoms to the number of carbon atoms on the carbon fiber surfaces of the woven fabric is not less than 0.06 and less than 0.17.

It is preferred that the woven fabric contains carbon black on its surfaces and/or inside.

It is preferred that the woven fabric contains a water-repellent substance.

An electrode element for a fuel cell of the invention is formed of the above-mentioned carbon fiber woven fabric for a fuel cell of the invention.

It is preferred that the electrode element comprises an electrode diffusion layer formed of the above-mentioned carbon fiber woven fabric for a fuel cell of the invention.

It is preferred that the electrode diffusion layer has a catalyst layer disposed thereon in layer.

It is preferred that the electrode diffusion layer has a catalyst layer and a polymer electrolyte film deposited thereon in layers.

A fuel cell of the invention comprises the above-mentioned electrode element of the invention.

It is preferred that the fuel cell has a grooved separator provided on the electrode element.

A mobile unit of the invention is mounted with the above-mentioned fuel cell.

A method for producing a carbon fiber woven fabric for a fuel cell of the invention comprises a pressurization step of pressurizing a precursor fiber woven fabric composed of carbon precursor fibers in the thickness direction and a step of carbonizing the precursor fiber woven fabric.

In the method for producing a carbon fiber woven fabric for a fuel cell, it is preferred that the pressurization step is carried out at a heating temperature of not more than 300°C at a pressure of 5 to 500 kg/cm.

In the method for producing a carbon fiber woven fabric for a fuel cell, it is preferred that the carbon precursor fibers are oxidized acrylic fibers.

THE BEST MODES FOR CARRYING OUT THE INVENTION

In the carbon fiber woven fabric for a fuel cell of the invention, it is necessary that the average fineness of the warp yarns and the weft yarns constituting the woven fabric is in the range of 0.005 to 0.028 g/m. It is preferable that the average fineness is in the range of 0.01 to 0.026 g/m, and more preferably in the range of 0.013 to 0.022 g/m. An average fineness of more than 0.028 g/m is not preferred, since the woven fabric becomes thick or a space between weaving yarns becomes large.

If the unit weight of a woven fabric is A (g/m$^2$), the density of warp yarns is Nw (yarns/cm), and the density of weft yarns is Nf (yarns/cm), then the average fineness can be obtained from the following equation (I).

$$\text{Average fineness (g/m)} = A/(Nw + Nf)/100 \qquad\qquad (I)$$

In the carbon fiber woven fabric for a fuel cell of the invention, it is necessary that the weave density of the warp yarns and/or the weft yarns is not less than 20 yarns/cm.

It is preferable that the weave density is not less than 22 yarns/cm. If the weave density is too low, the spaces between weaving yarns become large, and such problems are likely to occur that the catalyst layer is likely to come off, and that since the electrolytic membrane is likely to dry, high cell characteristics cannot be obtained. It is especially preferable that both the warp yarns and the weft yarns have the weave density mentioned above. If the weave density increases, the weaving speed declines to raise the cost. It is, therefore, preferable that the weave density is not more than 35 yarns/cm, and more preferably not more than 30 yarns/cm.

In the measurements of the average fineness and the weave density, in the case where the warp yarns and the weft yarns cannot be identified which is which in the woven fabric, the yarns in a given direction should be considered as warp yarns, and the yarns in the other direction, as weft yarns.

It is preferred that the unit weight of the carbon fiber woven fabric for a fuel cell of the invention is in the range of 50 to 150 g/m$^2$. A more preferred range is from 70 to 120 g/m$^2$, and a further more preferred range is from 80 to 98 g/m$^2$.

In the case where the unit weight is too low, the spaces between the weaving yarns constituting the woven fabric are so large that there occur such problems that the catalyst layer comes off and that since the electrolytic membrane is likely to dry, high cell characteristics cannot be obtained. In the case where the unit weight is too high, it is difficult to produce the woven fabric, and the woven fabric tends to be thick. As a result, such problems are likely to occur that the fuel cell is dimensionally greatly changed under pressurization, and that the separator grooves are likely to be filled with the woven fabric. In the case where the woven fabric has carbon black, resin and the like deposited, the weight excluding these deposits should be the weight of the carbon fiber woven fabric.

It is preferred that the thickness of the carbon fiber woven fabric for a fuel cell of the invention is in the range of 0.1 to 0.3 mm. A more preferred range is from 0.13 to 0.25 mm, and a further more preferred range is from 0.15 to 0.20. The thickness refers to the thickness measured when a pressure of 0.15 MPa is applied to the carbon fiber woven fabric.

In the case where the thickness is too small, such a problem occurs that since the electrolytic membrane is likely to dry, high cell characteristics cannot be obtained. Furthermore, in the case where the thickness is too large, such problems are likely to occur that the fuel cell is dimensionally greatly changed under pressurization, and that the separator grooves are likely to be filled with the woven fabric.

If the weave density of the warp yarns and/or the weft yarns of the carbon fiber woven fabric for a fuel cell of the invention is N (yarns/cm) and the yarn width is W (cm/yarn), then it is preferred that the value of product N x W is not less than 0.6. More preferred is not less than 0.65, and further more preferred is not less than 0.7.

The yarn width W refers to the width viewed in the direction perpendicular to the face of the woven fabric. The yarn width W can also be measured with the woven fabric magnified as an SEM photograph, etc. It is preferred that the N x W values of both the warp yarns and the weft yarns are not less than 0.6 respectively.

In the case where the warp yarns cannot be distinguished from the weft yarns on the woven fabric as explained in the above, the yarns in a given direction should be warp yarns, and the yarns in the other direction, weft yarns.

In the case where the value of N x W is too small, there occur such problems that since the spaces between weave yarns are large, the catalyst layer comes off, that since the surface is rough, the contact between the catalyst layer and the separator is not sufficient, and that since the electrolytic membrane is likely to dry, high cell characteristics cannot be obtained. It is preferred that the value of N x W is not more than 0.96. More preferred is not more than 0.90, and further more preferred is not more than 0.85. If the value of N x W is too high, weaving is so difficult as to lower the weaving speed, hence increasing the cost.

It is preferred that the crush value of the carbon fiber woven fabric for a fuel cell of the invention under compression is not more than 0.15 mm. More preferred is not more than 0.12 mm, and further more preferred is not more than 0.10 mm.

The crush value under compression refers to the difference between the thickness measured at a pressure of 0.15 MPa and the thickness measured at a pressure of 1.5 MPa. In the case where the crush value under compression is too large, there occur such problems that stack clamping is difficult, that it is difficult to achieve a uniform height, and that the woven fabric fills the separator grooves.

It is preferred that the warp yarns and/or the weft yarns constituting the carbon fiber woven fabric of the invention are spun yarns. Since spun yarns have many voids in them, higher air permeability and higher water permeability can be obtained.

It is preferred that the electric resistance of the carbon fiber woven fabric for a fuel cell of the invention is not more than 30 m$\Omega$cm$^2$. More preferred is not more than 25 m$\Omega$cm$^2$, and further more preferred is not more than 20 m$\Omega$cm$^2$. If the electric resistance is too high, the woven fabric used in an electrode of a fuel cell increases the voltage loss.

The method for measuring electric resistance is as follows. Two plates each of which is a vitreous carbon plate overlaid with a copper foil, wherein the vitreous carbon plate has the width of 50 mm, length of 200 mm, thickness of 1. 5 mm and a smooth surface, and the copper foil has the width of 50 mm, length of 200 mm and thickness of 0.1 mm are prepared. The plates are called test electrodes. The two test electrodes are overlaid on each other with the vitreous carbon sheets facing each other, to cross each other at their central portions. The carbon fiber woven fabrics are cut to have area S (cm$^2$), and the cut carbon fiber woven fabrics are pressurized to apply a pressure of 0.98 MPa for the area of the fabrics. At the ends on one side of the two test electrodes, current terminals are installed, and at the ends on the other side, voltage terminals are installed. Using the current terminals, a current of 1 A is made to flow between the two test electrodes. The voltage V (V) across the voltage terminals is measured, to calculate resistance R (m$\Omega$cm$^2$) from the following equation (II).

$$R = 1,000V \times S \qquad\qquad (II)$$

It is preferred that the differential pressure is not more than 5 mm Aq, when 14 cm$^3$/cm$^2$/sec of air is passed in the thickness direction of the carbon fiber woven fabric for a fuel cell of the invention. A more preferred range is from 0.2 to 2 mm Aq, and a further more preferred range is from 0.4 to 1.5 mm Aq. In the case where the differential pressure is too large, the air permeability, hydrogen permeability and water permeability are low, and the cell voltage tends to be low. In the case where the differential pressure is too small, the water is likely to evaporate, and the resistance of the membrane tends to be higher. In the case where carbon black, resin and the like are deposited on the woven fabric, these deposits should be removed before measuring the differential pressure.

It is preferred that the ratio of the number of oxygen atoms to the number of carbon atoms on the surfaces of the carbon fibers constituting the carbon fiber woven fabric for a fuel cell of the invention is not less than 0.06 and less than 0.17. A more preferred range is not less than 0.10 and not more than 0.16, and a further more preferred range is not less than 0.11 and not more than 0.15.

The ratio (O/C) of the number of oxygen atoms to the number of carbon atoms on the surfaces of the carbon fibers constituting the carbon fiber woven fabric is defined by the following equation.

O/C = (Rate of oxygen atoms on fiber surfaces)/(Rate of

carbon fibers on fiber surfaces)

If the ratio O/C on the surfaces of carbon fibers is less than 0.06, the fiber surfaces are low in hydrophilicity, and the migration of water in the yarns owing to the capillary tubes formed by plural carbon fibers tends to decrease. As a result, the extra water in the system cannot be efficiently discharged, and the water produced due to the power generation reaction is accumulated to clog the cathode electrode with water with a tendency of lowering the gas diffusibility.

If the ratio O/C on the surfaces of carbon fibers is not less than 0.17, the fiber surfaces become too high in hydrophilicity. Therefore, even in the case where the quantity of produced water is small, the cathode electrode can be clogged with water with a tendency of lowering the gas diffusibility. If the ratio O/C is in the range mentioned above, the surfaces of the fibers constituting the carbon fiber woven fabric for a fuel cell of the invention are moderately hydrophilic. Therefore, the water can highly migrate in the woven fabric owing to the capillary tubes formed by plural carbon fibers, to give a feature that the cathode electrode is unlikely to be clogged with water. For this reason, the extra water in the system can be efficiently discharged, to allow excellent water control.

The ratio of the number of oxygen atoms to the number of carbon atoms on the surfaces of carbon fibers can be measured by X-ray photoelectron spectroscopy.

It is preferred that the carbon fiber woven fabric for a fuel cell of the invention contains carbon black on its surfaces and/or inside for the purposes of increasing electric conductivity, smoothening the surfaces and controlling the water permeability. The method for adding carbon black is not especially limited, but it is preferred that carbon black is bound to the woven fabric using a resin or the like as an adhesive.

It is preferred that the carbon fiber woven fabric for a fuel cell of the invention contains a water-repellent substance for the purpose of preventing clogging with water when it is used in a fuel cell. Furthermore, a water-repellent substance can also be used as an adhesive for the carbon black. The water-repellent substance is not especially limited, and for example, a fluorine-containing compound, silicon-containing compound or the like can be preferably used.

The method for producing the carbon fiber woven fabric for a fuel cell of the invention is not especially limited. For example, yarns consisting of carbon fibers can be woven to produce a carbon fiber woven fabric, or carbon precursor fibers can also be woven to produce a precursor fiber woven fabric that is then carbonized into a carbon fiber woven fabric. As another method, a commercially available precursor fiber woven fabric can also be carbonized to produce a carbon fiber woven fabric. In the case where yarns consisting of carbon fibers are woven, it is likely to occur that the carbon fibers are broken or folded. Furthermore, the warp yarns and the weft yarns are likely to be shifted to deform the meshes of the produced carbon fiber woven fabric, and the warp yarns and the weft yarns at the edges of the woven fabric are likely to come off. Therefore, the latter method of carbonizing a carbon precursor fiber woven fabric is preferred.

The carbon fibers or precursor fibers of carbon fibers used for producing the carbon fiber woven fabric for a fuel cell of the invention are not especially limited. Examples of them include polyacrylonitrile-based carbon fibers, rayon-based carbon fibers, phenol-based carbon fibers, pitch-based carbon fibers, oxidized acrylic fibers, rayon fibers, phenol fibers, infusible pitch fibers, etc. An especially preferred method is to carbonize the woven fabric produced by weaving oxidized acrylic fibers.

In the process for producing the carbon fiber woven fabric for a fuel cell of the invention, it is preferred to include a step of pressurizing in the thickness direction, the woven fabric produced by weaving carbon precursor fibers, since the crush value under compression can be kept small, for example, when plural electrode diffusion layers formed of carbon fiber woven fabrics are laminated for producing a fuel cell.

It is preferred that the pressurization in the thickness direction is carried out before or during carbonization. The pressurization before or during carbonization is more effective in lessening the crush value under compression than the pressurization after carbonization.

The method of pressurizing before carbonization can be a continuous pressurization method using a roll press or belt press or a surface load pressurization method using a batch press or load. In view of the efficiency of the pressurization step, it is preferred to use a roll press or belt press that allows continuous pressurization.

It is preferred that the temperature during pressurization is not more than 300°C. A more preferred range is from 150 to 250°C, and a further more preferred range is from 170 to 230°C. In the case where the temperature is too low, the deformation under compression is too small, and the effect of reducing the thickness cannot be sufficiently obtained. In the case where oxidized acrylic fibers are used, a remarkable pressurization effect can be observed at 150°C or higher. In the case where the temperature is too high, since the oxidation of carbon precursor fibers in air takes place, the pressurization must be carried out in an inactive atmosphere. Furthermore, because of high temperature, equipment maintenance and process control become difficult. In the case of oxidized acrylic fibers, the problems of oxidation and deterioration do not occur at 250°C or lower, since the fibers underwent flame-retarding treatment.

In the case where the pressurization is carried out using rolls, it is preferred that the surface of at least one of the two rolls used for pressurization is made of a soft material such as rubber, resin, paper or nonwoven fabric for preventing the breaking of carbon precursor fibers and the decline of tensile strength. It is preferred that the line load of pressurization is in the range of 10 to 500 kg/cm. A more preferred range is from 50 to 300 kg/cm, and a further more preferred range is from 150 to 200 kg/cm.

In the case where hard rolls made of a metal or the like are used for pressurization, it is preferred that a clearance of 50 μm or more is established or that the line load is kept in the range of 5 to 200 kg/cm, for preventing the destruction of the woven fabric, the breaking of the fibers of the woven fabric, and the decline of tensile strength. A more preferred range of line load is from 10 to 100 kg/cm, and a further more preferred range is from 20 to 70 kg/cm.

In the case where a surface load is used for pressurization, it is preferred that the pressure is 5 MPa or more.

In the case where a woven fabric of carbon precursor fibers is pressurized while being carbonized, it is only required that the pressurization is carried out at least at any moment in the carbonization step. In the case where preliminary carbonization at the highest temperature of about 500 to 1,000°C is followed by regular carbonization at the highest temperature of higher than 1,000°C for carrying out carbonization twice, it is preferred that the woven fabric is pressurized during at least either preliminary carbonization or regular carbonization. The method of pressurization can be a continuous pressurization using rolls or belt, or a surface load pressurization, or a method of carbonizing a rolled woven fabric for pressurization using the tension of rolling and the tension caused by the shrinkage during carbonization, though the method is not limited to these methods.

In the case where a rolled woven fabric of carbon precursor fibers is carbonized, it is preferred that the outermost layer of the roll is covered with paper, film or woven fabric with a surface smoother than the woven fabric, since the woven fabric can be carbonized without wrinkling even at the outermost layer. More particularly it is preferred to cover the woven fabric of carbon precursor fibers with paper, film or woven fabric made of carbon or any other material capable of being carbonized and incapable of molten when carbonized, such as a polyimide, cellophane or cellulose.

In the case where a woven fabric of carbon precursor fibers is carbonized and subsequently pressurized, it is preferred to pressurize with the woven fabric wetted with a liquid substance such as water or organic solvent, or to pressurize the woven fabric having a resin such as a fluorine resin deposited. It is more preferred that a carbonized woven fabric having a resin deposited is pressurized at higher than its melting point or thermal deformation temperature.

In the carbon fiber woven fabric for a fuel cell of the invention, the carbon produced when an organic material deposited on the carbon fibers or carbon precursor fibers is carbonized, can also remain deposited. The deposited carbon has an effect of inhibiting the deformation under the pressurization of the carbon fiber woven fabric, but on the other hand, has a problem of lowering the gas permeability and the flexibility of the woven fabric. Therefore, it is preferred that the amount of the carbon is 20 wt% or less. More preferred is 5 wt% or less, and further more preferred is 2 wt% or less.

The carbon fiber woven fabric for a fuel cell of the invention can be preferably used as an electrode component such as a gas diffusion electrode for a fuel cell, since it has electric conductivity and fluid permeability.

Furthermore, the carbon fiber woven fabric for a fuel cell of the invention can be preferably used as a conductive sheet to be used in a fuel cell, especially as an electrode diffusion layer of a fuel cell. It can be especially suitably used as an electrode diffusion layer of a fuel cell having a grooved separator. In the case where a grooved separator is used as passages for feeding oxygen and a fuel to a fuel cell electrode, if the crush value of the carbon fiber woven fabric under compression is large, the portions of the woven fabric facing the grooves and hence not subjected to compression go into the grooves, to inhibit the function as the passages of oxygen and fuel. The carbon fiber woven fabric for a fuel cell of the invention, that is thin in thickness and small in the crush value under compression, can effectively avoid inhibiting the passage function. As a result, the grooves can have a smaller depth and the device can be made more compact.

Moreover, the carbon fiber woven fabric for a fuel cell of the invention can be preferably used as an electrode diffusion layer having a catalyst layer disposed thereon as a layer or having a catalyst layer and a polymer electrolyte membrane disposed thereon as layers to form a unit. Still furthermore, the electrode diffusion layer or the unit can be preferably used as a component of a fuel cell. The fuel cell containing the carbon fiber woven fabric for a fuel cell of the invention, which is flexible and small in the crush value under compression, is strong against vibration and impact, is compact, and is suitable as a fuel cell for a mobile unit. It is especially suitable as a fuel cell for a mobile unit requiring a compact fuel cell, above all, for a motor vehicle or two-wheeled car.

Examples are described below. The properties described in the examples were measured according to the following methods.

Crush value under compression:

A carbon fiber woven fabric was placed on a smooth table, and a micrometer indenter having a diameter of 5 mm was allowed to descend from above. With a load applied to the indenter, the thickness was measured at a pressure of 0.15 MPa, and with the load further increased, the thickness was measured at a pressure of 1.5 MPa. The difference between the thickness measured at a pressure of 0.15 MP and the thickness measured at a pressure of 1.5 MPa was identified as the crush value. A smaller crush value is more desirable.

Electric resistance:

The method described before was used to obtain the electric resistance from the following equation. A lower electric resistance is more desirable.

$$R = 1{,}000V \times S$$

where

R: Resistance ($m\Omega cm^2$)
V: Voltage across voltage terminals (V)
S: Area of carbon fiber woven fabric ($cm^2$)
Voltage at 0.7 $A/cm^2$:

A carbon fiber woven fabric was coated with a mixture consisting of carbon black and polytetrafluoroethylene, and the coated fabric was heat-treated at 380°C, to produce a woven fabric having a carbon layer. The deposited amount of the mixture consisting of carbon black and polytetrafluoroethylene was about 2 $mg/cm^2$.

On the other hand, a mixture consisting of platinum-loaded carbon as a catalyst and Nafion was deposited on both sides of Nafion 112 (produced by E. I. du Pont de Nemours and Company), to prepare a membrane-catalyst sheet. The amount of platinum as a catalyst was about 0.5 $mg/cm^2$.

The membrane-catalyst sheet was held between two carbon-layered woven fabrics having the carbon layers turned inside, and the laminate was heated at 130°C and pressurized at 3 MPa for integration, to obtain a membrane-electrode assembly (MEA).

The MEA was held between grooved separators, and the cell characteristics were measured according to a conventional method. The cell temperature was 70°C, and the temperature at which hydrogen gas was applied was 80°C, while the temperature at which air was applied was 60°C. The gas pressure was atmospheric pressure. At 0.7 $A/cm^2$, the hydrogen availability was 70% and the air availability was 40%. A higher voltage is more desirable. At 0.7 $A/cm^2$, 0.5 V or higher is acceptable.

Tensile strength:

A woven fabric was cut to have a dimension of 5 to 7 cm in the warp direction and a dimension of 1.5 to 1.7 cm in the weft direction. Several warp yarns at both the edges in the weft direction were removed, to ensure that there were no broken warp yarns in the sample having a length of 5 to 7 cm. The width across the remaining warp yarns of the sample was measured as a sample width, and a tensile test was carried out at a span of 3 cm and a tensile speed of 1 mm/min. The value obtained by dividing the maximum load (kg) by the sample width (cm) was identified as the tensile strength.

Examples 1, 2, 3, 4 and 5

Spun yarns of oxidized acrylic fibers ("Lastan" produced by Asahi Kasei Corp., 1/34 Nm = 0.029 g/m) were woven into a plain weave. The woven fabric was carbonized in two steps at the highest temperatures of 650°C and 1,950°C in an inactive atmosphere, to obtain a carbon fiber woven fabric. The unit weight and weave densities of each oxidized acrylic fiber woven fabric, and the unit weight, weave densities, average weave density N, fineness, thickness, weaving yarn width W and the value of N x W of each carbon fiber woven fabric are shown in Table 1.

Example 6

Spun yarns of oxidized acrylic fibers (produced by Asahi Kasei Corp., 1/34 Nm = 0.029 g/m) were used as warp yarns and spun yarns of oxidized acrylic fibers (produced by Asahi Kasei Corp., 2/34 Nm = 0.059 Nm) were used as weft yarns to produce a plain weave. The woven fabric was carbonized in two steps at the highest temperatures of 650°C and 1,950°C in an inactive atmosphere, to obtain a carbon fiber woven fabric. The unit weight and weave densities of the oxidized acrylic fiber woven fabric, and the unit weight, weave densities, average weave density N, fineness, thickness, weaving yarn width W and the value of N x W of the carbon fiber woven fabric are shown in Table 1.

Example 7

Oxidized acrylic fibers (produced by Toray Industries, Inc.) were spun into yarns by a draft zone system spinning. The fineness of the spun yarns was 1/40 Nm = 0.025 g/m. The spun yarns were woven into a plain weave. The woven fabric was carbonized in two steps at the highest temperatures of 650°C and 1,950°C in an inactive atmosphere, to obtain a carbon fiber woven fabric. The unit weight and weave densities of the oxidized acrylic fiber woven fabric, and the unit weight, weave densities, average weave density N, fineness, thickness, weaving yarn width W and the value of N x W of the carbon fiber woven fabric are shown in Table 1.

Example 8

The oxidized acrylic fiber woven fabric of Example 1 was held between carbon sheets, carbonized at the highest temperature of 800°C in an inactive atmosphere with a pressure of 2.8 g/cm$^2$ applied to the woven fabric, depressurized and carbonized at 1,950°C, to obtain a carbon fiber woven fabric. The unit weight and weave densities of the oxidized acrylic fiber woven fabric, and the unit weight, weave densities, average weave density N, fineness, thickness, weaving yarn width W and the value of N x W of the carbon fiber woven fabric are shown in Table 1.

Example 9

The oxidized acrylic fiber woven fabric of Example 1 was fed through a roll press consisting of one iron roll and one rubber roll (iron roll 200°C, rubber roll 120°C), to be pressurized at 200 kg/cm. The woven fabric was carbonized in two steps at the highest temperatures of 650°C and 1,950°C in an inactive atmosphere, to obtain a carbon fiber woven fabric. The unit weight and weave densities of the oxidized acrylic fiber woven fabric, and the unit weight, weave densities, average weave density N, fineness, thickness, weaving yarn width W and the value of N x W of the carbon fiber woven fabric are shown in Table 1.

Examples 10, 11, 12, 13 and 14

The oxidized acrylic fiber woven fabric of Example 5 was fed through a roll press consisting of two iron rolls (roll temperature 60, 100, 125, 150 or 200°C), to be pressurized at 50 kg/cm. The woven fabric was carbonized at the highest temperature of 1,950°C in vacuum, to obtain a carbon fiber woven fabric. The unit weight and weave densities of the oxidized acrylic fiber woven fabric, and the unit weight, weave densities, average weave density N, fineness and thickness of each carbon fiber woven fabric are shown in Table 1.

Examples 15, 16, 17 and 18

The oxidized acrylic fiber woven fabric of Example 5 was fed through a roll press consisting of two iron rolls (roll temperature 200°C), to be pressurized at 11, 100, 150 or 250 kg/cm. The woven fabric was carbonized at the highest temperature of 1,950°C in vacuum, to obtain a carbon fiber woven fabric. The unit weight and weave densities of the oxidized acrylic fiber woven fabric, and the unit weight, weave densities, average weave density N, fineness and thickness of each carbon fiber woven fabric are shown in Table 1.

Example 19

The oxidized acrylic fiber woven fabric of Example 5 was fed through a roll press consisting of two iron rolls (roll temperature 200°C) having a clearance of 150 μm, to be pressurized at 250 kg/cm. The woven fabric was carbonized at the highest temperature of 1,950°C in vacuum, to obtain a carbon fiber woven fabric. The unit weight and weave densities of the oxidized acrylic fiber woven fabric, and the unit weight, weave densities, average weave density N, fineness and thickness of the carbon fiber woven fabric are shown in Table 1.

Example 20

In a beaker containing 500 ml of 0.1N sulfuric acid, a carbon sheet was used as the cathode, and the carbon fiber woven fabric of Example 4 cut into a size of 8 cm x 8 cm was used as the anode, for carrying out electrolytic treatment with a current of 48 mA kept flowing for 125 seconds. After completion of electrolytic treatment, the carbon fiber woven fabric was washed with purified water, and dried in a 100°C oven for 10 minutes, to obtain a carbon fiber woven fabric treated to be hydrophilic.

Example 21

In a beaker containing 500 ml of 0.1N sulfuric acid, a carbon sheet was used as the cathode, and the carbon fiber woven fabric of Example 4 cut into a size of 8 cm x 8 cm was used as the anode, for carrying out electrolytic treatment with a current of 48 mA kept flowing for 250 seconds. After completion of electrolytic treatment, the carbon fiber woven fabric was washed with purified water, and dried in a 100°C oven for 10 minutes, to obtain a carbon fiber woven fabric treated to be hydrophilic.

Comparative Example 1

Spun yarns of oxidized acrylic fibers (produced by Asahi Kasei Corp., 2/34 Nm = 0.059 g/m) were woven into a plain weave. The woven fabric was carbonized in two steps at the highest temperatures of 650°C and 1,950°C in an inactive atmosphere, to obtain a carbon fiber woven fabric. The unit weight and weave densities of the oxidized acrylic fiber woven fabric, and the unit weight, weave densities, average weave density N, fineness, thickness, weaving yarn width W and the value of N x W of the carbon fiber woven fabric are shown in Table 1.

Comparative Example 2

Torayca Cloth (produced by Toray Industries, Inc.) "CO6349B" was heated at 1,400°C in an inactive atmosphere, to remove the sizing agent. The unit weight, weave densities, average weave density N, fineness, thickness, weaving yarn width W and the value of N x W of the carbon fiber woven fabric are shown in Table 1.

Comparative Example 3

In a beaker containing 500 ml of 0.1N sulfuric acid, a carbon sheet was used as the cathode, and the carbon fiber woven fabric of Example 4 cut into a size of 8 cm x 8 cm was used as the anode, for carrying out electrolytic treatment with a current of 48 mA kept flowing for 500 seconds. After completion of electrolytic treatment, the carbon fiber woven fabric was washed with purified water, and dried in a 100°C oven for 10 minutes, to obtain a carbon fiber woven fabric treated to be hydrophilic.
For the carbon fiber woven fabrics obtained in Examples 1 to 21 and Comparative Examples 1 to 3, the respective values of the crush value under compression, electric resistance, and differential pressure in air permeation are shown in Table 2, together with the values of the voltage measured with a current of 0. 7 A/cm$^2$ in the solid polymer electrolyte fuel cells produced using the respective woven fabrics. In the woven fabric of Comparative Example 1, the applied carbon black and polytetrafluoroethylene were separated from the woven fabric, not allow the cell characteristics to be measured.
As can be seen from Tables 1 and 2, the carbon fiber woven fabrics for a fuel cell of the invention were thin and small in the crush value under compression, showing good cell characteristics. On the other hand, the woven fabrics of Comparative Examples 1 and 2 having an average fineness of more than 0.03 g/m were inferior in cell characteristics. That is, the woven fabric of Comparative Example 1 was relatively thick and large in the crush value under compression. The woven fabric of Comparative Example 2 was as low as 0.44 V in voltage.
From the comparison of Examples 5 and 10 to 14, it can be seen that pressing can reduce the thickness, to make the crush value under compression small, and that the effect of thinning at 150°C or higher is remarkable.
From the comparison of Examples 5 and 14 through 19, it can be seen that if the pressure of a roll press consisting of two metallic rolls is raised, the thickness is reduced to make the crush value under compression small. On the other hand, as shown in Table 3, if the pressure is raised especially to 100 kg/cm or higher, it is necessary to establish a clearance between the rolls and to select an adequate pressure, since otherwise the tensile strength of the woven fabric declines.
As shown in Table 4, since the woven fabrics of Examples 15 and 16 are adequately hydrophilic on the fiber surfaces, their voltages were 0.61 V and 0.62 V respectively, being higher than 0.60 V of Example 4. On the other hand, in Comparative Example 3, since the ratio O/C was 0.17, the hydrophilicity on the fiber surfaces was so high that the voltage was as low as 0.41 V.

## Table 1

| | Oxidized fiber woven fabric | | | Carbon fiber woven fabric | | |
|---|---|---|---|---|---|---|
| | Weave density | | Unit weight | Unit weight | Weave density | |
| | Warp yarns | Weft yarns | | | Warp yarns | Weft yarns |
| | (yarns/cm) | (yarns/cm) | (g/m$^2$) | (g/m$^2$) | (yarns/cm) | (yarns/cm) |
| Example 1 | 17.0 | 17.5 | 104 | 72 | 20.0 | 20.0 |
| Example 2 | 24.0 | 23.0 | 157 | 99 | 28.0 | 26.0 |
| Example 3 | 24.0 | 17.5 | 140 | 88 | 27.0 | 20.5 |
| Example 4 | 22.0 | 22.0 | 150 | 93 | 25.5 | 25.5 |
| Example 5 | 22.5 | 20.0 | 146 | 91 | 25.0 | 22.5 |
| Example 6 | 14.0 | 18.0 | 164 | 102 | 16.5 | 20.0 |
| Example 7 | 23.0 | 20.0 | 126 | 86 | 27.0 | 25.0 |
| Example 8 | 17.0 | 17.5 | 104 | 66 | 20.0 | 19.0 |
| Example 9 | 22.0 | 22.0 | 150 | 92 | 25.0 | 25.5 |
| Example 10 | 22.5 | 20.0 | 146 | 91 | 25.0 | 22.5 |
| Example 11 | 22.5 | 20.0 | 146 | 91 | 25.0 | 22.5 |
| Example 12 | 22.5 | 20.0 | 146 | 91 | 25.0 | 22.5 |
| Example 13 | 22.5 | 20.0 | 146 | 89 | 25.0 | 22.5 |
| Example 14 | 22.5 | 20.0 | 146 | 89 | 25.0 | 22.5 |
| Example 15 | 22.5 | 20.0 | 146 | 90 | 25.0 | 22.5 |
| Example 16 | 22.5 | 20.0 | 146 | 88 | 25.0 | 22.5 |
| Example 17 | 22.5 | 20.0 | 146 | 88 | 25.0 | 22.5 |
| Example 18 | 22.5 | 20.0 | 146 | 87 | 25.0 | 22.5 |
| Example 19 | 22.5 | 20.0 | 146 | 89 | 24.5 | 22.5 |
| Example 20 | 22.0 | 22.0 | 150 | 93 | 25.5 | 25.5 |
| Example 21 | 22.0 | 22.0 | 150 | 93 | 25.5 | 25.5 |

## Table 1 (continued)

| | Carbon fiber woven fabric | | | | |
|---|---|---|---|---|---|
| | Average weave density (yarns/cm) | Average fineness (g/m) | Thickness (mm) | Width W (cm) | N×W |
| Example 1 | 20.0 | 0.018 | 0.19 | 0.028 | 0.56 |
| Example 2 | 27.0 | 0.018 | 0.22 | 0.028 | 0.76 |
| Example 3 | 24.0 | 0.019 | 0.22 | 0.028 | 0.67 |
| Example 4 | 25.5 | 0.018 | 0.24 | 0.030 | 0.77 |
| Example 5 | 24.0 | 0.019 | 0.22 | 0.028 | 0.67 |
| Example 6 | 18.0 | 0.028 | 0.25 | 0.040 | 0.72 |
| Example 7 | 26.0 | 0.017 | 0.23 | 0.026 | 0.68 |
| Example 8 | 19.5 | 0.017 | 0.18 | 0.025 | 0.49 |
| Example 9 | 25.5 | 0.018 | 0.20 | 0.037 | 0.94 |
| Example 10 | 24.0 | 0.019 | 0.21 | - | - |
| Example 11 | 24.0 | 0.019 | 0.20 | - | - |
| Example 12 | 24.0 | 0.019 | 0.20 | - | - |
| Example 13 | 24.0 | 0.019 | 0.18 | - | - |
| Example 14 | 24.0 | 0.019 | 0.17 | - | - |
| Example 15 | 24.0 | 0.019 | 0.18 | - | - |
| Example 16 | 24.0 | 0.019 | 0.16 | - | - |
| Example 17 | 24.0 | 0.019 | 0.15 | - | - |
| Example 18 | 24.0 | 0.018 | 0.14 | - | - |
| Example 19 | 24.0 | 0.019 | 0.19 | - | - |
| Example 20 | 25.5 | 0.018 | 0.24 | 0.030 | 0.77 |
| Example 21 | 25.5 | 0.018 | 0.24 | 0.030 | 0.77 |

## Table 1 (continued)

| | Oxidized fiber woven fabric | | | Carbon fiber woven fabric | | |
|---|---|---|---|---|---|---|
| | Weave density | | Unit weight | Weave density | Unit weight | |
| | Warp yarns | Weft yarns | | | Warp yarns | Weft yarns |
| | (yarns/cm) | (yarns/cm) | $(g/m^2)$ | $(g/m^2)$ | (yarns/cm) | (yarns/cm) |
| Comparative Example 1 | 17.0 | 15.5 | 213 | 133 | 19.0 | 17.0 |
| Comparative Example 2 | - | - | - | 120 | 9.0 | 9.0 |
| Comparative Example 3 | 22.0 | 22.0 | 150 | 93 | 25.5 | 25.5 |

## Table 1 (continued)

| | Carbon fiber woven fabric | | | | |
|---|---|---|---|---|---|
| | Average weave density (yarns/cm) | Average fineness (g/m) | Thickness (mm) | Width W (cm) | N×W |
| Comparative Example 1 | 18.0 | 0.037 | 0.31 | 0.050 | 0.90 |
| Comparative Example 2 | 9.0 | 0.066 | 0.14 | 0.104 | 0.94 |
| Comparative Example 3 | 25.5 | 0.018 | 0.24 | 0.030 | 0.77 |

(Note: In the carbon fiber woven fabrics of Examples 9 and 10 of Table 1, the warp yarns could not be distinguished from weft yarns.)

Table 2

| | Carbon fiber woven fabric | | | |
|---|---|---|---|---|
| | Crush value under compression (mm) | Electric resistance (m$\Omega$cm) | Differential pressure in air permeation (mmAq) | Voltage at 0.7 A/cm$^2$ (V) |
| Example 1 | 0.09 | 9 | 0.2 | 0.51 |
| Example 2 | 0.10 | 11 | 1.8 | 0.57 |
| Example 3 | 0.10 | 11 | 0.6 | 0.60 |
| Example 4 | 0.11 | 10 | 1.1 | 0.60 |
| Example 5 | 0.11 | 10 | 1.1 | 0.60 |
| Example 6 | 0.11 | 11 | 1.0 | 0.55 |
| Example 7 | 0.12 | 11 | 0.7 | 0.58 |
| Example 8 | 0.07 | 12 | 0.2 | 0.52 |
| Example 9 | 0.09 | 10 | 1.4 | 0.58 |
| Example 10 | 0.08 | 10 | 1.3 | - |
| Example 11 | 0.07 | 10 | 1.4 | - |
| Example 12 | 0.07 | 10 | 1.5 | - |
| Example 13 | 0.06 | 10 | 1.7 | - |
| Example 14 | 0.05 | 10 | 1.9 | - |
| Example 15 | 0.07 | 10 | - | - |
| Example 16 | 0.05 | 10 | - | - |
| Example 17 | 0.05 | 10 | - | - |
| Example 18 | 0.05 | 10 | - | - |
| Example 19 | 0.07 | 10 | - | - |
| Example 20 | 0.11 | 10 | 1.1 | 0.61 |
| Example 21 | 0.11 | 10 | 1.1 | 0.62 |

**Table 2 (continued)**

| | Carbon fiber woven fabric | | | |
|---|---|---|---|---|
| | Crush value under compression (mm) | Electric resistance (mΩcm) | Differential pressure in air permeation (mmAq) | Voltage at 0.7 A/cm$^2$ (V) |
| Comparative Example 1 | 0.16 | 10 | 2.4 | - |
| Comparative Example 2 | 0.03 | 8 | 1.6 | 0.44 |
| Comparative Example 3 | 0.11 | 10 | 1.1 | 0.41 |

Table 3

| | Press pressure (kg/cm) | Clearance (μm) | Tensile strength (kg/cm) |
|---|---|---|---|
| Example 5 | - | - | 2.5 |
| Example 14 | 50 | 0 | 2.6 |
| Example 15 | 11 | 0 | 2.7 |
| Example 16 | 100 | 0 | 2.1 |
| Example 17 | 150 | 0 | 1.7 |
| Example 18 | 250 | 0 | 1.1 |
| Example 19 | 250 | 150 | 2.7 |

Table 4

| | Number of oxygen atoms/Number of carbon atoms (O/C) |
|---|---|
| Example 4 | 0.01 |
| Example 20 | 0.11 |
| Example 21 | 0.15 |
| Comparative Example 3 | 0.17 |

INDUSTRIAL APPLICABILITY

Since the carbon fiber woven fabric for a fuel cell of the invention is a thin and dense woven fabric having a small fineness, it can be slightly deformed under compression and is small in the spaces between the fibers and in undulation. Therefore, it can be suitably used as an electrode diffusion layer to be used in a fuel cell.

**Claims**

1. A carbon fiber woven fabric for a fuel cell, **characterized in that** the average fineness of the warp yarns and the weft yarns constituting the woven fabric is in the range of 0.005 to 0.028 g/m, and that the weave density of the warp yarns and/or the weft yarns is not less than 20 yarns/cm.

2. A carbon fiber woven fabric for a fuel cell, according to claim 1, wherein the unit weight of the woven fabric is in the range of 50 to 150 g/m$^2$.

3. A carbon fiber woven fabric for a fuel cell, according to claim 1, wherein the thickness of the woven fabric is in the range of 0.1 to 0.3 mm.

4.  A carbon fiber woven fabric for a fuel cell, according to claim 1, wherein the value of N x W is not less than 0.6 where N (yarns/cm) is the weave density of the warp yarns and/or the weft yarns and W (cm/yarn) is the yarn width.

5.  A carbon fiber woven fabric for a fuel cell, according to claim 1, wherein the crush value of the woven fabric under compression is not more than 0.15 mm.

6.  A carbon fiber woven fabric for a fuel cell, according to claim 1, wherein the warp yarns and/or the weft yarns are spun yarns.

7.  A carbon fiber woven fabric for a fuel cell, according to claim 1, wherein the electric resistance of the woven fabric is not more than 30 m$\Omega$cm$^2$, and the differential pressure caused when 14. cm$^3$/cm$^2$/sec of air is passed through the woven fabric in the thickness direction is not more than 5 mm Aq.

8.  A carbon fiber woven fabric for a fuel cell, according to claim 1, wherein the ratio of the number of oxygen atoms to the number of carbon atoms on the carbon fiber surfaces of the woven fabric is not less than 0.06 and less than 0.17.

9.  A carbon fiber woven fabric for a fuel cell, according to claim 1, wherein the woven fabric contains carbon black on its surfaces and/or inside.

10. A carbon fiber woven fabric for a fuel cell, according to claim 1, wherein the woven fabric contains a water-repellent substance.

11. An electrode element for a fuel cell, formed of the carbon fiber woven fabric as set forth in any one of claims 1 through 10.

12. An electrode element for a fuel cell, comprising an electrode diffusion layer formed of the carbon fiber woven fabric as set forth in any one of claims 1 through 10.

13. An electrode element for a fuel cell, according to claim 12, wherein the electrode diffusion layer has a catalyst layer disposed thereon in layer.

14. An electrode element for a fuel cell, according to claim 12, wherein the electrode diffusion layer has a catalyst layer and a polymer electrolyte membrane disposed thereon in layers.

15. A fuel cell comprising the electrode element as set forth in any one of claims 11 through 14.

16. A fuel cell, according to claim 15, wherein a grooved separator is provided on the electrode element.

17. A mobile unit mounted with the fuel cell as set forth in claim 15 or 16.

18. A method for producing a carbon fiber woven fabric for a fuel cell, comprising a pressurization step of pressurizing a precursor fiber woven fabric composed of carbon precursor fibers in the thickness direction, and a step of carbonizing the precursor fiber woven fabric.

19. A method for producing a carbon fiber woven fabric for a fuel cell, according to claim 18, wherein the pressurization step is carried out at a heating temperature of not more than 300°C at a pressure of 5 to 500 kg/cm.

20. A method for producing a carbon fiber woven fabric for a fuel cell, according to claim 18 or 19, wherein the carbon precursor fibers are oxidized acrylic fibers.

## INTERNATIONAL SEARCH REPORT

International application No.

PCT/JP02/10579

| A. CLASSIFICATION OF SUBJECT MATTER |
|---|
| Int.Cl⁷ H01M4/96, 8/10, 4/88, D03D15/12 |

According to International Patent Classification (IPC) or to both national classification and IPC

| B. FIELDS SEARCHED |
|---|
| Minimum documentation searched (classification system followed by classification symbols)<br>Int.Cl⁷ H01M4/96, 8/10, 4/88, D03D15/12 |

Documentation searched other than minimum documentation to the extent that such documents are included in the fields searched
| Jitsuyo Shinan Koho | 1926–1996 | Toroku Jitsuyo Shinan Koho | 1994–2003 |
| Kokai Jitsuyo Shinan Koho | 1971–2003 | Jitsuyo Shinan Toroku Koho | 1996–2003 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | WO 00/30195 A1 (Toray Industries, Inc.), 25 May, 2000 (25.05.00), & EP 1139470 A1 | 1–17 |
| A | WO 00/49213 A1 (Showa Denko Kabushiki Kaisha), 24 August, 2000 (24.08.00), & EP 1162296 A1 | 1–17 |
| A | JP 9-278558 A (Osaka Gas Co., Ltd., Unitika Ltd.), 28 October, 1997 (28.10.97), (Family: none) | 1–17 |
| A | JP 2000-299113 A (Toray Industries, Inc.), 24 October, 2000 (24.10.00), (Family: none) | 1–17 |

☒ Further documents are listed in the continuation of Box C.   ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 14 January, 2003 (14.01.03) | 28 January, 2003 (28.01.03) |

| Name and mailing address of the ISA/<br>Japanese Patent Office | Authorized officer |
|---|---|
| Facsimile No. | Telephone No. |

Form PCT/ISA/210 (second sheet) (July 1998)

<table>
<tr><td colspan="2">**INTERNATIONAL SEARCH REPORT**</td><td>International application No.<br>PCT/JP02/10579</td></tr>
</table>

**Box I   Observations where certain claims were found unsearchable (Continuation of item 2 of first sheet)**

This international search report has not been established in respect of certain claims under Article 17(2)(a) for the following reasons:

1. ☐ Claims Nos.:

because they relate to subject matter not required to be searched by this Authority, namely:

2. ☐ Claims Nos.:

because they relate to parts of the international application that do not comply with the prescribed requirements to such an extent that no meaningful international search can be carried out, specifically:

3. ☐ Claims Nos.:

because they are dependent claims and are not drafted in accordance with the second and third sentences of Rule 6.4(a).

**Box II   Observations where unity of invention is lacking (Continuation of item 3 of first sheet)**

This International Searching Authority found multiple inventions in this international application, as follows:
    Whereas for a group of inventions in claims to fulfill the requirement of
unity of invention, there must exist special technical features for linking
the group of inventions so as to form a single general inventive concept,
this international application describes two inventions classified as claims
1-17 and 18-20 as described on (extra sheet).
(Continued to extra sheet)

1. ☒ As all required additional search fees were timely paid by the applicant, this international search report covers all searchable claims.

2. ☐ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**   ☐   The additional search fees were accompanied by the applicant's protest.

☒   No protest accompanied the payment of additional search fees.

Form PCT/ISA/210 (continuation of first sheet (1)) (July 1998)

EP 1 445 811 A1

**INTERNATIONAL SEARCH REPORT**

International application No.

PCT/JP02/10579

C (Continuation). DOCUMENTS CONSIDERED TO BE RELEVANT

| Category* | Citation of document, with indication, where appropriate, of the relevant passages | Relevant to claim No. |
|---|---|---|
| A | JP 2001-226855 A (Mitsubishi Chemical Corp.), 21 August, 2001 (21.08.01), (Family: none) | 1-17 |
| Y | JP 61-158669 A (Toray Industries, Inc.), 18 July, 1986 (18.07.86), Claims (Family: none) | 18-20 |
| Y | JP 2-92881 A (Oji Paper Co., Ltd.), 03 April, 1990 (03.04.90), Page 1, lower right column, lines 4 to 10; page 2, upper right column, line 1 to page 4, upper right column, line 9 (Family: none) | 18-20 |
| Y | JP 52-25120 A (Toyobo Co., Ltd.), 24 February, 1977 (24.02.77), Claims; page 2, lower left column, line 12 to lower right column; page 3, upper left column, line 6 (Family: none) | 20 |

Form PCT/ISA/210 (continuation of second sheet) (July 1998)

| INTERNATIONAL SEARCH REPORT | International application No. |
|---|---|
| | PCT/JP02/10579 |

Continuation of Box No.II of continuation of first sheet(1)

Whereas for a group of inventions in claims to fulfill the requirement of unity of invention, there must exist special technical features for linking the group of inventions so as to form a single general inventive concept, a group of inventions described in claims 1-20 are linked only in terms of "fuel cell-use carbon fiber woven fabric" as evidenced by descriptions themselves in claims.

However, since this subject matter is a known technical matter and cannot constitute a special technical feature as is evident from "background technique" of this description. Therefore, there exists among a group of inventions in claims 1-20 no special technical features for linking the group of inventions so as to form a single general inventive concept.

Accordingly, it is clear that a group of inventions in claims 1-20 do not fulfill the requirement of unity of invention.

Next, the number of groups of inventions, that is, the number of inventions described in the claims of this international application and liked so as to form a general inventive concept will be studied.

According to specific embodiments of inventions described in independent claims, it is clear in the claims of this international application that two inventions are described classified as claims 1-17 and 18-20. No other matter linking a plurality of inventions in claims is found.

Accordingly, it is recognized two inventions are described in this international application.

Form PCT/ISA/210 (extra sheet) (July 1998)